# EUROPEAN PATENT APPLICATION

(11) **EP 4 841 777 A1**
(43) Date of publication of application: **18.11.2026**
(21) Application number: 24951237.7
(22) Date of filing: 02.12.2024
(51) Int. Cl.: H01M 50/256

(54) **BATTERY PACK MOUNTING GUIDE RAIL AND ENERGY STORAGE CONTAINER**

(30) Priority: 15.08.2024 CN 202421991448 U
(71) Applicant: Eve Energy Co., Ltd., Huizhou, Guangdong 516006 (CN)
(72) Inventor: LI, Meng, Guangdong 516006 (CN); ZHAO, Zihui, Guangdong 516006 (CN)
(74) Representative: Studio Torta S.p.A.
(86) International application number: PCT/CN2024/136169
(87) International publication number: WO 2026/036574

(57) **Abstract**

The present application provides a battery pack mounting rail and an energy storage container. The battery pack mounting rail is applied to the energy storage container. The battery pack mounting rail includes a supporting portion; a connecting portion connected to the supporting portion to define an L-shaped structure; and a first limiting portion protruded from the connecting portion and disposed opposite to the supporting portion. The supporting portion, the connecting portion and the first limiting portion together define a limiting cavity, and the limiting cavity is configured to realize limiting and fixing of a battery pack.

## Description

This application claims priority to Chinese Patent Application No. 202421991448.X, filed with the Chinese Patent Office on August 15, 2024. The disclosures of the aforementioned application are incorporated herein by reference.

### TECHNICAL FIELD

The present application relates to a technical field of energy storage batteries, and more particularly, to a battery pack mounting rail and an energy storage container.

### BACKGROUND

A size of an individual pack of a battery energy storage system is becoming larger and larger, in particular a size in length, which results in a long size of a battery pack mounting rail. In industries, the battery pack mounting rail mostly in a L-shape.

### SUMMARY

### TECHNICAL PROBLEM

However, in case that the battery pack mounting rail in the L-shape is made in a long size, problems such as unstable fixing, difficulty in processing and welding, and weight increase may occur. Meanwhile, the battery pack mounting rail is mostly grounded by applying conductive paint to a surface of a fixing screw on the battery pack mounting rail. This way for being grounded is not reliable for the battery pack mounting rail with the long size.

### TECHNICAL SOLUTION

The present application provides a battery pack mounting rail applied to an energy storage container, the battery pack mounting rail includes a supporting portion; a connecting portion connected to the supporting portion to define an L-shaped structure; and a first limiting portion protruded from the connecting portion and disposed opposite to the supporting portion. The supporting portion, the connecting portion and the first limiting portion together define a limiting cavity, and the limiting cavity is configured to realize limiting and fixing of a battery pack.

The present application also provides an energy storage container including at least two battery pack mounting rails as described above, and the at least two battery pack mounting rails being oppositely arranged; and a battery pack including a housing, fixing portions being provided on opposite sides of the housing respectively, and the fixing portions on opposite sides are arranged in the limiting cavities of the battery pack mounting rails on opposite sides, respectively.

### BENEFICIAL EFFECT

According to a battery pack mounting rail provided in the present application, a first limiting portion is provided on a connecting portion to define a limiting cavity, and the limiting cavity is in a fixed connection with fixing portions of a battery pack, thereby realizing an effective fixing for the battery pack, and improving the fixing effect.

According to an energy storage container provided in the present application, by providing fixing portions on an outer side of a housing of a battery pack and arranging the fixing portions in a limiting cavity of a battery pack mounting rail, the mounting stability of the battery pack on the battery pack mounting rail can be improved.

### BRIEF DESCRIPTION OF THE DRAWINGS

FIG. 1 is a schematic structural diagram of a battery pack mounting rail according to an embodiment of the present application.
FIG. 2 is a schematic structural diagram of a reinforcing portion according to an embodiment of the present application.
FIG. 3 is a schematic structural diagram of a battery pack according to an embodiment of the present application.
FIG. 4 is a partial structural diagram of an energy storage container according to an embodiment of the present application.
FIG. 5 is a cross-sectional view of part A in FIG. 4.
FIG. 6 is a partial structural diagram of a case according to an embodiment of the present application.

### Reference numerals:

battery pack mounting rail - 1; supporting portion - 10; connecting portion - 20; first limiting portion - 30; limiting cavity - 40; slide-in end - 50; depth limiting portion - 60; depth limiting fixture - 70; limiting protrusion - 80; reinforcing portion - 90; first extending portion - 91; second extending portion - 92; reinforcing rib - 93; buffer portion - 94; grounding portion -100; battery pack - 2; housing - 21; fixing portion - 211; case - 3; top cover - 31; bottom plate - 32; upright - 33; and grounding wire - 34.

### DETAILED DESCRIPTION OF THE EMBODIMENTS

In the description of the present application, unless otherwise expressly defined and defined, the terms "link", "connect", "fix" are to be understood in a broad sense, for example, as a fixed connection, as a detachable connection, or as a whole; may be as a mechanical connection or an electrical connection; may be as a directly connection or indirectly connection by means of an intermediate medium; may be as internal communication of the two elements or interaction of the two elements. The specific meaning of the above terms in the present application may be understood by one of the ordinary skill in the art as the case may be.

In the description, unless otherwise expressly defined and defined, that the first feature is "on" or "under" the second feature includes that the first feature may direct contact the second feature, as well as that the first feature indirect contact the second feature by an additional feature therebetween. Moreover, that the first feature is "over", "above" or "on" the second feature includes that the first feature directly above and obliquely above the second feature, as well as that the first feature is higher than the second feature. That the first feature is "down", "below" or "under" the second feature includes that the first feature directly below and obliquely above the second feature, as well as that the first feature is lower than the second feature.

In the description of the embodiments, the orientation or the positional relationship with the terms " up", " down", " left ", " right ", " front ", " rear ", is based on the orientation or the positional relationship in the drawings. The terms are used for description and brief, rather than indicating or implying the device or the element referred to has a special orientation, or configured and operated in a special orientation. Thus, these terms should not be understood as limitations on the present application. Furthermore, the terms "first" and "second" are used to distinguish between descriptions and have no particular meaning.

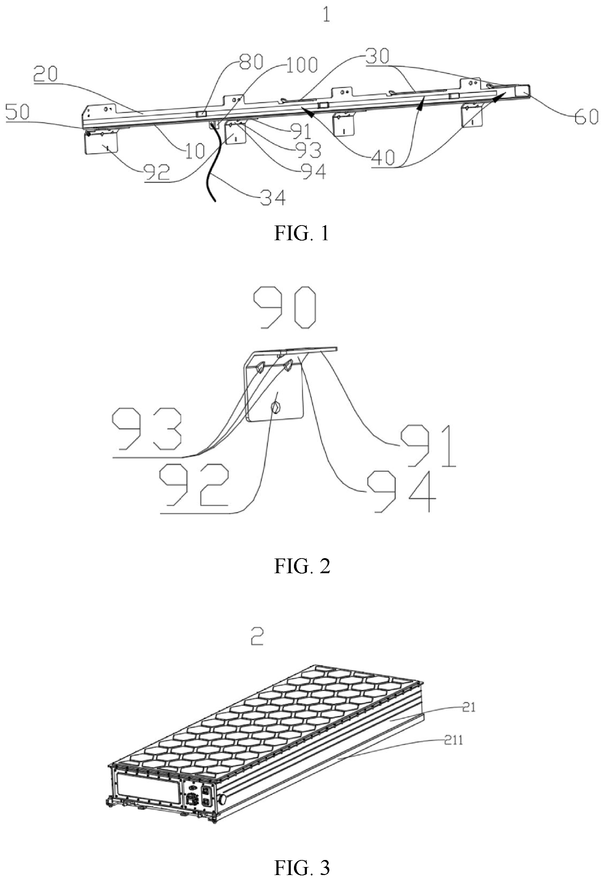

In a first aspect, referring to FIG. 1 to FIG. 2, an embodiment of the present application provides a battery pack mounting rail 1 for being applied in an energy storage container, including:
a supporting portion 10;
a connecting portion 20 connected to the supporting portion 10 to define an L-shaped structure; and
a first limiting portion 30 protruded from the connecting portion 20 and disposed opposite to the supporting portion 10.

The supporting portion 10, the connecting portion 20 and the first limiting portion 30 together define a limiting cavity 40, and the limiting cavity 40 is configured to realize limiting and fixing of a battery pack 2.

It should be understood that the supporting portion 10 has an elongated shape, a side of the supporting portion 10 in a width direction is connected to the connecting portion 20, and the connecting portion 20 is provided at an angle to the supporting portion 10 to define the L-shaped structure. The connecting portion 20 may be integrally provided as the elongated shape, and a length of the connecting portion 20 may be as same as that of the supporting portion 10. Alternatively, the connecting portion 20 may include a plurality of sections provided at intervals and connected to the supporting portion 10. The supporting portion 10 and the connecting portion 20 may be made of sheet metal. The supporting portion 10 and the connecting portion 20 may be integrally provided, or may be provided separately and fixedly connected. The first limiting portion 30 is in an elongated shape, and a side of the first limiting portion 30 in a width direction thereof is connected to the connecting portion 20, and the first limiting portion 30 is provided at an angle to the connecting portion 20. The first limiting portion 30 may be provided in an integral elongated shape, and a length of the first limiting portion 30 may be as same as that of the connecting portion 20. Alternatively, the first limiting portion 30 may include a plurality of sections provided at intervals and connected to the connecting portion 20. The first limiting portion 30 and the supporting portion 10 may be disposed opposite to each other. The first limiting portion 30 and the supporting portion 10 may be parallel to each other, or may be provided to define a certain included angle therebetween.

In an embodiment, the supporting portion 10 is integrally provided with the connecting portion 20.

It should be understood that the supporting portion 20 can be integrally provided with the connecting portion 10, which is facilitated for processing and firm for connecting.

In an embodiment, the first limiting portion 30 is provided on a side of the connecting portion 20 away from the supporting portion 10.

It should be understood that by providing the first limiting portion 30 on the side of the connecting portion 20 away from the supporting portion 10, a capacity of the limiting cavity 10 can be made larger, thereby improving the fixing effect of the limiting cavity 40 and making full use of material and spaces. A width of the limiting cavity 40 is limited by a width of the connecting portion 20 and can be adjusted as required. The first limiting portion 30 is provided at an edge of the connecting portion 20, so that the width of the connecting portion 20 can be fully utilized to make the width of the limiting cavity 40 greater.

In an embodiment, the first limiting portion 30 is integrally provided with the supporting portion 10.

In an embodiment, a plurality of first limiting portions 30 are provided on the connecting portion 20 at intervals.

It should be understood that by providing the plurality of first limiting portions 30 at intervals on the connecting portion 20, the materials can be reduced while the fixing effect is ensured, thereby reducing a weight of the battery pack mounting rail 1 and reducing a cost. The structures, shapes, and sizes of the plurality of first limiting portions 30 may be same or different.

In an embodiment, the battery pack mounting rail 1 has a slide-in end 50, and the slide-in end is configured for the battery pack 2 sliding into the battery pack mounting rail 1. A distance between the first limiting portion 30 and the supporting portion 10 is gradually reduced to a predetermined value in a direction away from the slide-in end.

It should be understood that, the distance between the first limiting portion 30 and the supporting portion 10 is gradually reduced to the predetermined value in a direction away from the slide-in end, so that the battery pack can be facilitated to be mounted and fixed to the battery pack mounting rail 1. An inclined angle of the first limiting portion 30 at the slide-in end 50 ranges from 30° to 60°, so that the battery pack 2 can be facilitated to be guided to slide into the battery pack mounting rail 1.

In an embodiment, the battery pack mounting rail 1 is provided with a depth limiting portion 60 and a depth limiting fixture 70 at ends in an extending direction of the battery pack mounting rail 1, respectively. The depth limiting portion 60 and the depth limiting fixture 70 are provided on an inner side the L-shaped structure. The depth limiting portion 60 is fixedly connected to the supporting portion 10 and/or the connecting portion 20, and the depth limiting fixture 70 is detachably provided on the supporting portion 10 and/or the connecting portion 20.

It should be understood that by providing the depth limiting portion 60 and the depth limiting fixture 70, a movement of the battery pack in the extending direction of the battery pack mounting rail 1 can be limited, thereby improving the fixing effect of the battery pack mounting rail 1 to the battery pack 2. By detachably arranging the depth limiting fixture 70 on the supporting portion 10 and/or the connecting portion 20, the depth limiting fixture 70 can be easily mounted after the battery pack is slid into the battery pack mounting rail 1. The depth limiting portion 60 may be a sheet shape or may be of another shape. The depth limiting portion 60 may be integrally provided with the supporting portion 10 and/or the connecting portion 20, or may be welded to the supporting portion 10 and/or the connecting portion 20. The depth limiting fixture 70 may be a screw.

In an embodiment, the connecting portion 20 is provided with a limiting protrusion 80, and the limiting protrusion 80 is disposed in the limiting cavity 40.

It should be understood that by providing the limiting protrusion 80 on the connecting portion 20, a movement of the battery pack in a depth direction of the limiting cavity 40 can be limited, thereby improving the fixing effect of the battery pack mounting rail 1 to the battery pack 2. The limiting protrusion 80 may be integrally provided with the connecting portion 20. A shape, a height, and a length of the limiting protrusion 80 may be provided as required.

In an embodiment, both ends of the limiting protrusion 80 are obliquely disposed in the extending direction of the battery pack mounting rail 1.

It should be understood that an inclined angle of the limiting protrusion 80 at the end ranges from 30 to 60°, facilitating the sliding of the battery pack 2 into the battery pack mounting rail 1.

In an embodiment, a plurality of limiting protrusions 80 are provided on the connecting portion 20 at intervals.

It should be understood that by providing the plurality of limiting protrusions 80 at intervals on the connecting portion 20, the materials can be reduced while ensuring the fixing effect, thereby reducing the weight of the battery pack mounting rail 1 and reducing the cost. The number of the limiting protrusions 80 may be provided as desired. The limiting protrusions 80 may be provided on the connecting portion 20 at equal intervals.

In an embodiment, the battery pack mounting rail 1 further includes a reinforcing portion 90 provided on an outer side of the L-shaped structure and fixedly connected to the supporting portion 10.

It should be understood that by providing the reinforcing portion 90, the stability of the battery pack mounting rail 1 can be improved. The reinforcing portion 90 may be integrally provided with the supporting portion 10, or may be welded to the supporting portion 10.

In an embodiment, the reinforcing portion 90 includes a first extending portion 91 and a second extending portion 92 provided in an L-shape, and the first extending portion 91 is fixedly connected to the supporting portion 10. A T-shaped structure is defined by the first extending portion 91, and the connecting portion 20 and the supporting portion 10 in the L-shaped structure.

It should be understood that by arranging the reinforcing portion 90 in the L-shape, the supporting strength of the battery pack mounting rail 1 can be increased. Both the first extending portion 91 and the second extending portion 92 may be sheet-like and may be made of sheet metal. The first extending portion 91 is fixedly connected to the supporting portion 10. The first extending portion 91 may be in surface contact with the supporting portion 10 and welded to the supporting portion 10. The second extending portion 92 may be coplanar with the connecting portion 20 so that the supporting portion 10 and the connecting portion 20 may be better supported. Width, length, and thickness of the first extending portion 91 and the second extending portion 92 may be provided as desired.

In an embodiment, a plurality of reinforcing portions 90 are provided on the supporting portion 10 at intervals.

It should be understood that by providing the plurality of reinforcing portions 90 at intervals on the supporting portion 10, it is possible to reduce the materials while ensuring the supporting strength, thereby reducing the weight of the battery pack mounting rail 1, reducing the welding workload, and reducing the cost. A structure, shape, and size of the plurality of reinforcing portions 90 may be the same or different.

In an embodiment, a reinforcing rib 93 is provided at a junction of the first extending portion 91 and the second extending portion 92.

It should be understood that the reinforcing rib 93 is provided at the junction of the first extending portion 91 and the second extending portion 92, so that the strength of the reinforcing portion 90 can be increased, thereby increasing the supporting strength of the battery pack mounting rail 1. The reinforcing rib 93 may be a convex boss on the reinforcing portion 90 and may be stamped by a die. The number and the position of the reinforcing ribs 93 may be provided as desired.

In an embodiment, a buffer portion 94 is provided between the first extending portion 91 and the second extending portion 92, an included angle between the buffer portion 94 and the first extending portion 91 and an included angle between the buffer portion 94 and the second extending portion 92 are greater than 90° and less than 180°. The reinforcing rib 93 is provided at a junction of the buffer portion 94 and the first extending portion 91 and/or a junction of the buffer portion 94 and the second extending portion 92.

It should be understood that by providing the buffer portion 94 between the first extending portion 91 and the second extending portion 92, and providing the reinforcing rib 93 at the junction of the buffer portion 94 and the first extending portion 91 and the junction of the buffer portion 94 and the second extending portion 92, the structural stability of the reinforcing portion 90 can be improved, thereby improving the supporting strength of the battery pack mounting rail 1. The buffer portion 94 may be a connecting sheet between the first extending portion 91 and the second extending portion 92, and may be made of sheet metal. The first extending portion 91, the second extending portion 92, and the buffer portion 94 may be integrally provided.

In an embodiment, the battery pack mounting rail 1 further includes a grounding portion 100 welded to the supporting portion 10 and/or the connecting portion 20.

It should be understood that by providing the grounding portion welded to the supporting portion 10 and/or the connecting portion 20, the reliability of the battery pack mounting rail 1 to be grounded can be improved. The grounding portion 100 is welded to the supporting portion 10 and/or the connecting portion 20 so that the grounding portion 100 is in electrical communication with the supporting portion 10 and the connecting portion 20. The grounding portion 100 may be a stainless-steel sheet, which is not sprayed on surfaces.

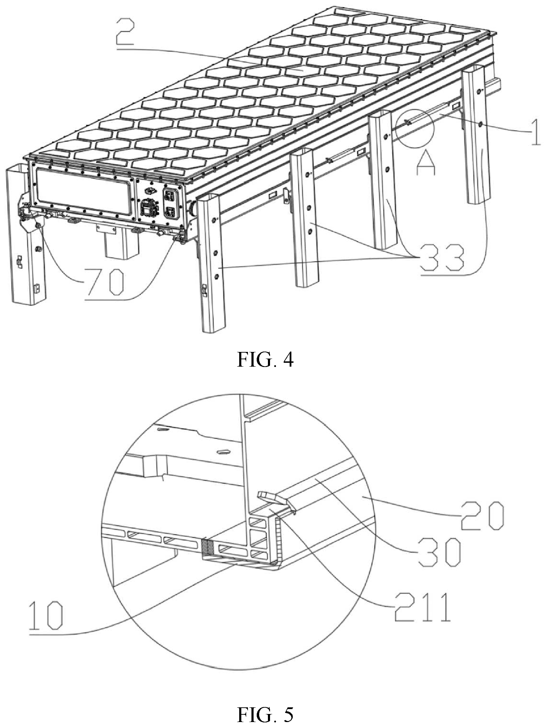

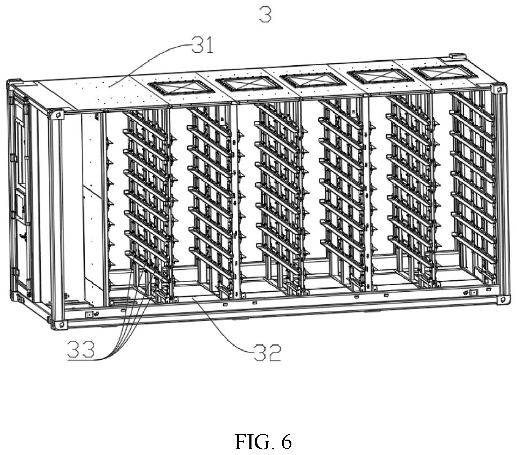

In a second aspect, referring to FIG. 3 to FIG. 6, an embodiment of the present application provides an energy storage container including:

at least two battery pack mounting rails 1 as described above, and the at least two battery pack mounting rails 1 being oppositely arranged; and

a battery pack 2 including a housing 21, and fixing portions 211 being provided on opposite sides of the housing 21 respectively, and the fixing portions 211 on opposite sides are arranged in the limiting cavities 40 of the battery pack mounting rails 1 on opposite sides, respectively.

It should be understood that a shape of each of the fixing portions 211 matches a shape of the limiting cavity 40 so that the fixing portion 211 can be fixed in the limiting cavity 40. The first limiting portions 30 of two opposite battery pack mounting rails 1 may be oppositely arranged, or may be staggered.

In an embodiment, the battery pack mounting rail 1 is provided with the depth limiting portion 60 and the depth limiting fixture 70 at ends in the extending direction of the battery pack mounting rail 1, respectively. The ends of the fixing portion 211 in the extending direction of the battery pack mounting rail 1 are clamped between the depth limiting portion 60 and the depth limiting fixture 70.

It should be understood that by clamping the fixing portion 211 of the battery pack 2 between the depth limiting portion 60 and the depth limiting fixture 70, the movement of the battery pack 2 along the extending direction of the battery pack mounting rail 1 can be restricted, thereby improving the mounting stability of the battery pack 2. During mounting the battery pack 2, the battery pack 2 is slid into the battery pack mounting rail 1, and the fixing portion 211 is slid into the limiting cavity 40, and then the depth limiting fixture 70 is mounted after the fixing portion 211 is in contact with the depth limiting portion 60.

In an embodiment, the energy storage container further including:
a case 3 including a top cover 31 and a bottom plate 32 oppositely disposed; and
one or more uprights 33 fixedly connected with the top cover 31 and the bottom plate 32 at ends respectively. The uprights 33 are provided as at least two groups arranged at intervals, each of the at least two groups is provided with at least two uprights 33. The battery pack mounting rails 1 are provided on opposite sides of adjacent groups of the at least two groups. The battery pack mounting rails 1 extend in a direction perpendicular to a direction in which the uprights 33 extend. A side of the connecting portion 20 away from the limiting cavity 40 is fixedly connected to the uprights 33, and the supporting portion 10 is located on a side of the connecting portion 20 close to the bottom plate 32.

The battery pack mounting rail 1 further includes the grounding portion 100 connected to the case 3 through a grounding wire 34.

The battery pack mounting rail 1 further includes the reinforcing portion 90 fixedly connected to the upright 33.

It should be understood that, by providing the uprights 33 and the battery pack mounting rails 1 in the case 3, it is possible to divide an inside of the case 3 into a plurality of spaces to receive a plurality of battery packs 2. The grounding portion 100 of the battery pack mounting rail 1 is connected to the case 3 through the grounding wire 34, so that the battery pack mounting rail 1 can be connected to the ground of the energy storage container. The connection of the grounding portion 100 with the case 3 through the grounding wire 34 may be realized by welding a nut to the grounding portion 100 and pressing the grounding wire 34 by a screw to connect with the case 3. The connecting portion 20 is configured to be connected to the upright 33 to fix the battery pack mounting rail 1, and the supporting portion 10 is configured to support the battery pack 2. The reinforcing portion 90 is fixedly connected to the upright 33 for fixing. The number of the reinforcing portions 90 may be as same as the number of the uprights 33 to which the battery pack mounting rail 1 is connected. The connecting portion 20 and the reinforcing portion 90 may be connected to the uprights 33 by bolts for facilitating installation.

In an embodiment, each group of the uprights 33 is provided with a plurality of battery pack mounting rails 1 in the extending direction thereof.

It should be understood that the plurality of battery pack mounting rails 1 are provided in the extending direction of each group of the uprights 33, so that an inside of the energy storage container can be divided into a plurality of spaces in a height direction thereof to receive more battery packs 2.

## Claims

1. A battery pack mounting rail, being applied to an energy storage container and comprising:
a supporting portion;
a connecting portion connected to the supporting portion to define an L-shaped structure; and
a first limiting portion protruded from the connecting portion and disposed opposite to the supporting portion;
wherein the supporting portion, the connecting portion and the first limiting portion together define a limiting cavity, and the limiting cavity is configured to realize limiting and fixing of a battery pack.

2. The battery pack mounting rail according to claim 1, wherein the supporting portion is integrally provided with the connecting portion; and/or
the first limiting portion is provided on a side of the connecting portion away from the supporting portion; and/or
the first limiting portion is integrally provided with the supporting portion; and/or
a plurality of first limiting portions are provided on the connecting portion at intervals; and/or
the battery pack mounting rail has a slide-in end configured to slide the battery pack into the battery pack mounting rail, and a distance between the first limiting portion and the supporting portion is gradually reduced to a predetermined value in a direction away from the slide-in end.

3. The battery pack mounting rail according to claim 1, wherein a depth limiting portion and a depth limiting fixture are respectively provided at ends of the battery pack mounting rail in an extending direction thereof, the depth limiting portion and the depth limiting fixture are provided on an inner side of the L-shaped structure, the depth limiting portion is fixedly connected to the supporting portion and/or the connecting portion, and the depth limiting fixture is detachably provided on the supporting portion and/or the connecting portion.

4. The battery pack mounting rail according to claim 1, wherein a limiting protrusion is provided on the connecting portion, and the limiting protrusion is provided in the limiting cavity.

5. The battery pack mounting rail according to claim 1, further comprising a reinforcing portion provided on an outer side the L-shaped structure and fixedly connected to the supporting portion.

6. The battery pack mounting rail according to claim 5, wherein the reinforcing portion comprises a first extending portion and a second extending portion provided in an L-shape, the first extending portion is fixedly connected to the supporting portion to define a T-shaped structure with the connecting portion and the supporting portion in the L-shaped structure; and/or
a plurality of reinforcing portions are arranged on the supporting portion at intervals.

7. The battery pack mounting rail according to claim 6, wherein a reinforcing rib is provided at a junction of the first extending portion and the second extending portion; and/or
a buffer portion is provided between the first extending portion and the second extending portion, an included angle between the buffer portion and the first extending portion and an included angle between the buffer portion and the second extending portion are greater than 90° and less than 180°, and the reinforcing rib is provided at a junction of the buffer portion and the first extending portion and/or a junction of the buffer portion and the second extending portion.

8. The battery pack mounting rail according to claim 1, further comprising a grounding portion welded to the supporting portion and/or the connecting portion.

9. An energy storage container, comprising:
at least two battery pack mounting rails according to any one of claims 1 to 8, wherein the at least two battery pack mounting rails are oppositely arranged; and
the battery pack comprising a housing, wherein fixing portions are provided on opposite sides of the housing respectively, the fixing portions on opposite sides are arranged in the limiting cavities of the battery pack mounting rails on opposite sides, respectively.

10. The energy storage container according to claim 9, wherein a depth limiting portion and a depth limiting fixture are provided at ends of the battery pack mounting rail in an extending direction of the battery pack mounting rail, respectively, and both ends of each of the fixing portions in the extending direction of the battery pack mounting rail are clamped between the depth limiting portion and the depth limiting fixture; and/or
wherein the energy storage container further comprises:
a case comprising a top cover and a bottom plate oppositely disposed; and
one or more uprights fixedly connected with the top cover and the bottom plate at ends respectively; wherein the uprights are provided as at least two groups arranged at intervals, each of the at least two groups comprises at least two uprights, the battery pack mounting rails are arranged on opposite sides of adjacent groups of the at least groups, respectively, and the battery pack mounting rails extend in a direction perpendicular to a direction the uprights extending; wherein a side of the connecting portion away from the limiting cavity is fixedly connected with the uprights, and the supporting portion is located on a side of the connecting portion close to the bottom plate;
wherein the battery pack mounting rail further comprises a grounding portion connected to the case by a grounding wire;
wherein the battery pack mounting rail further comprises a reinforcing portion fixedly connected to the upright.
